# EUROPÄISCHE PATENTSCHRIFT

(11) **EP 4 246 206 B1**
(45) Veröffentlichungstag und Bekanntmachung des Hinweises auf die Patenterteilung: **03.09.2025**
(21) Anmeldenummer: 23162060.0
(22) Anmeldetag: 15.03.2023
(51) Int. Cl.: G02F 1/35, G02B 26/02, G02B 26/06, F42B 15/34, G02B 5/30, G02B 23/12, G02B 27/00, F41H 13/00

(54) **FLUGGERÄT, FLUGKÖRPER ODER WIRKMITTEL**
AIRCRAFT, MISSILE OR ACTIVE AGENT
APPAREIL, MISSILE OU MOYEN D'ACTION

(30) Priorität: 15.03.2022 DE 102022000894
(43) Veröffentlichungstag der Anmeldung: 20.09.2023
(73) Patentinhaber: Diehl Defence GmbH & Co. KG, 88662 Überlingen (DE)
(72) Erfinder: Tholl, Hans Dieter, 88682 Salem (DE)
(74) Vertreter: Diehl Patentabteilung

(56) Entgegenhaltungen:
- DE-A1- 19 724 080
- US-A1- 2010 110 179

## Beschreibung

Die Erfindung betrifft ein Fluggerät, Flugkörper oder Wirkmittel umfassend einen Suchkopf oder eine Aufklärungseinrichtung mit einer Vorrichtung zur optischen Erfassung eines Zielobjekts, wobei die Vorrichtung ein fokussierendes optisches Element umfasst, das dazu ausgebildet ist, durch das optische Element fallende Strahlung in einer Fokusebene zu fokussieren.

Vorrichtungen zur Erfassung von Zielobjekten sind grundsätzlich aus dem Stand der Technik bekannt. Hierbei sind ferner Schutzelemente bzw. Schutzeinrichtungen bekannt, die den Detektor der Vorrichtung vor Strahlung schützen sollen. Beispielsweise werden nichtlineare optische Elemente verwendet, die einen Durchtritt von Strahlung basierend auf einem nichtlinearen optischen Effekt begrenzen. Hierbei wird insbesondere ausgenutzt, dass derartige Schutzeinrichtungen erst oberhalb eines definierten Schwellwerts, beispielsweise der Intensität der Strahlung, eine (signifikante) Begrenzung durchführen. Soll der Detektor beispielsweise durch Strahlung mit vergleichsweise hoher Intensität "geblendet" oder beschädigt werden, führt die Schutzeinrichtung eine Begrenzung der Intensität bzw. Bestrahlungsstärke durch, sodass eine Beschädigung bzw. Zerstörung des Detektors verhindert werden kann. In der DE 197 24 080 A1 wird ein Infrarot-Suchkopf für zielsuchende Flugkörper beschrieben. Für den Schutz des Detektors vor hochintensiver Strahlung werden verschiedene Einrichtungen zur Abwehr derselbigen vorgeschlagen, beispielsweise der Einsatz mechanischer oder trägheitsloser Blenden, Strahlablenkmittel oder eines Prismenpaars, bei welchem eine Austrittsfläche mit einer Halbleiterschicht mit nichtlinearem Absorptionsverhalten beschichtet ist.

Die Anordnung einer derartigen Schutzeinrichtung bzw. eines solchen Schutzelements im Strahlengang ist jedoch nur begrenzt möglich, d.h., dass insbesondere nur eine begrenzte Anzahl an Anordnungsmöglichkeiten für die Schutzeinrichtung zur Verfügung steht. Es ist sicherzustellen, dass die Schutzeinrichtung möglichst die höchste Intensität der Strahlung erfährt, um basierend auf dem nichtlinearen optischen Effekt die Begrenzung bzw. Dämpfung durchführen zu können. Dies bedeutet insbesondere, dass die Schutzeinrichtung in der Bildebene oder einer Zwischenbildebene angeordnet werden sollte. Wird die Schutzeinrichtung in der Bildebene angeordnet, führt dies dazu, dass der Detektor notwendigerweise nicht mehr in der Bildebene angeordnet werden kann, sodass dies zu einer Defokussierung bzw. einem Defokus-Fehler führt.

Aus der US 2010/0110179 A1 ist ein Abbildungssystem zum Abbilden von Objekten innerhalb eines Sichtfeldes des Systems bekannt. Das Abbildungssystem umfasst eine Abbildungslinsenanordnung, eine Lichtdetektoreinheit in einem bestimmten Abstand von der Abbildungslinsenanordnung und eine Steuereinheit, die mit dem Ausgang der Detektoreinheit verbunden werden kann. Die Abbildungslinsenanordnung umfasst eine Abbildungslinse und ein optisches Element, das sich in der Nähe der Linsenöffnung befindet, wobei das optische Element eine Aperturkodierung durch eine Anordnung von Bereichen einführt, die eine Phase des darauf einfallenden Lichts unterschiedlich beeinflussen und die zufällig innerhalb der Linsenöffnung verteilt sind, wodurch eine axial abhängige zufällige Phasenverteilung in der optischen Übertragungsfunktion (OTF) des Abbildungssystems erzeugt wird, was zu einer erweiterten Schärfentiefe des Abbildungssystems führt.

Der Erfindung liegt die Aufgabe zugrunde ein Fluggerät, Flugkörper oder Wirkmittel umfassend einen Suchkopf oder eine Aufklärungseinrichtung mit einer verbesserten Vorrichtung zur optischen Erfassung eines Zielobjekts anzugeben.

Die Aufgabe wird durch ein Fluggerät, Flugkörper oder Wirkmittel umfassend einen Suchkopf oder eine Aufklärungseinrichtung mit einer Vorrichtung mit den Merkmalen des Anspruchs 1 gelöst. Vorteilhafte Ausgestaltungen sind Gegenstand der Unteransprüche.

Wie eingangs beschrieben, betrifft die Erfindung durch ein Fluggerät, Flugkörper oder Wirkmittel umfassend einen Suchkopf oder eine Aufklärungseinrichtung mit einer Vorrichtung zur optischen Erfassung eines Zielobjekts, umfassend ein fokussierendes optisches Element, das dazu ausgebildet ist, durch das optische Element fallende Strahlung in einer Fokusebene zu fokussieren. Die Vorrichtung weist ferner eine in der Fokusebene angeordnete Schutzeinrichtung auf, die dazu ausgebildet ist, die Bestrahlungsstärke in Abhängigkeit eines Strahlungsparameters zu limitieren. Eine Detektoreinrichtung der Vorrichtung ist in einer in dem Strahlengang der Vorrichtung nach der Schutzeinrichtung angeordneten Detektorebene angeordnet. Das optische Element umfasst ein Phasenelement zur Wellenfrontkodierung der Strahlung. Die Wellenfrontkodierung wird mittels einer Steuerungseinrichtung der Vorrichtung, zum Beispiel mittels eines Algorithmus auf Basis von Detektorsignalen der Detektoreinrichtung, dekodiert. Die Steuerungsvorrichtung steht hierzu in Wirkverbindung mit dem Detektor, ist also zur Weiterverarbeitung der Detektorsignale eingerichtet.

In dem Strahlengang der Vorrichtung befindet sich - bezogen von einer Objektebene in Richtung einer Bildebene - nach dem fokussierenden optischen Element, insbesondere als Teil des fokussierenden optischen Elements, ein Phasenelement, das die Wellenfront der Strahlung, die durch das optische Element in den Strahlengang eintritt bzw. die durch das optische Element hindurchtritt, in Form einer Wellenfrontkodierung kodiert. Diese Wellenfrontkodierung wird anschließend von der Steuerungseinrichtung verwendet, um eine Dekodierung vorzunehmen, sodass die Defokussierung eines Bilds - also einer auf der Detektorebene der Detektoreinrichtung erzeugte Abbildung einer vorzugsweise ein Zielobjekt umfassenden Objektszene - auf der Detektoreinrichtung bzw. in der Detektorebene "beseitigt" bzw. "herausgerechnet" werden kann. Vorteilhafterweise ist die Schutzeinrichtung in einer (Zwischen-) Bildebene angeordnet, so dass dort ein zuverlässiges Auslösen bzw. Übersteigen eines Schwellwerts erreicht wird, um die Schutzwirkung der Schutzeinrichtung basierend auf dem nichtlinearen optischen Effekt zu realisieren. Mit anderen Worten kann die Schutzeinrichtung durch die erfindungsgemäße Anordnung in einer Fokusebene bzw. (Zwischen-) Bildebene zuverlässig getriggert werden, um die zulässige Intensität bzw. Bestrahlungsstärke der Strahlung, die auf die Detektoreinrichtung fallen kann bzw. darf - ohne insbesondere die Abbildungsqualität einer Objektszene auf der Detektoreinrichtung zu beeinträchtigen oder ohne dass die Detektoreinrichtung irreparable Schäden davon trägt -, zuverlässig zu begrenzen.

Der Defokus-Fehler bzw. die Reduktion der Strukturauflösung des Bilds auf der Detektoreinrichtung kann durch die Steuerungseinrichtung in Kenntnis des optischen Strahlengangs, insbesondere in Kenntnis des Phasenelements, beseitigt bzw. kompensiert werden. Mit anderen Worten kann bei bekannter Wellenfrontkodierung die Steuerungseinrichtung durch geeignete Mittel, zum Beispiel ein geeignetes Filter, dazu ausgebildet sein, eine Dekodierung vorzunehmen und somit den Defokus-Fehler, der durch das Anordnen der Detektoreinrichtung außerhalb der Fokusebene entsteht, zu kompensieren.

Im Rahmen der Anmeldung wird allgemein eine Vorrichtung zur optischen Erfassung eines Zielobjekts beschrieben. Grundsätzlich kann die Vorrichtung dazu ausgebildet sein, ein Zielobjekt in einer Zielumgebung zu erfassen. Die Vorrichtung kann Bestandteil einer übergeordneten Einrichtung sein. Beispielsweise kann die Vorrichtung stationär oder mobil verwendet werden bzw. ausgebildet sein. Die Vorrichtung ist gemäß der Erfindung Bestandteil eines Suchkopfes bzw. einer Aufklärungseinrichtung bzw. ein Suchkopf oder eine solche Aufklärungseinrichtung weist die beschriebene Vorrichtung auf. Entsprechend der Erfindung ist ein solcher Suchkopf bzw. eine solche Aufklärungseinrichtung in einem Fluggerät bzw. einem Flugkörper oder einem Wirkmittel angeordnet und wird dort verwendet. Insbesondere die Verwendung im Suchkopf eines Flugkörpers, vorzugsweise eines Lenkflugkörpers, ist vorteilhaft: Es kann hierdurch sichergestellt werden, dass der Flugkörper mit einem eine solche Vorrichtung umfassenden Suchkopf ein einmal mittels der Detektoreinrichtung aufgefasstes Zielobjekt auch bei Beaufschlagung der Detektoreinrichtung mit Blend- und/oder Störstrahlung weiter verfolgen kann und nicht in Folge von Beeinträchtigungen der Detektoreinrichtungen "verliert".

Wie erwähnt, führt das Phasenelement eine Kodierung der Wellenfront der Strahlung ein, die in den Strahlengang eintritt. Das Phasenelement ist insbesondere in räumlicher Nähe zu dem fokussierenden optischen Element, beispielsweise am Eingang des Strahlengangs, angeordnet. Umfasst das optische Element mehrere Komponenten bzw. bildet ein optisches System aus einer oder mehreren Linsen und/oder Spiegeln, so ist das Phasenelement vorzugsweise im vorderen, d.h. der Objektszene zugewandtem Bereich des optischen Systems angeordnet. Das Phasenelement kann zur Modifikation der Punktbildfunktion der Vorrichtung derart ausgebildet sein, dass die optische Transferfunktion (OTF, MTF) keine Nullstellen aufweist. Das Phasenelement kann die Punktbildfunktion derart modifizieren, dass die optische Transferfunktion (OTF, MTF) keine Nullstellen aufweist. Mit anderen Worten kann durch das Phasenelement die Punktbildfunktion (PSF) so verändert werden, dass die optische Transferfunktion (OTF) bzw. die Kontrastübertragungsfunktion keine Nullstellen aufweist. Hierdurch wird insbesondere vermieden, dass eine Kontrastumkehr auftritt. Die beschriebene Kodierung der Wellenfront kann anschließend (algorithmisch) kompensiert werden. Die Steuerungseinrichtung ist im Speziellen zur algorithmischen Kompensation ausgebildet, zum Beispiel indem ein geeignetes Filter angewendet wird.

Die von dem Phasenelement aufgebrachte Kodierung der Wellenfront wird somit durch einen geeigneten Algorithmus korrigiert bzw. kompensiert. Dadurch kann der Defokus, der durch das Anordnen der Schutzeinrichtung in der Fokusebene und auch ein Anordnen bzw. eine Positionierung der Detektoreinrichtung "außer Fokus" korrigiert werden.

Die Schutzeinrichtung kann grundsätzlich beliebig ausgebildet sein, solange die Schutzeinrichtung dazu ausgebildet ist, die Detektoreinrichtung vor zu hoher Intensität zu schützen. Erfindungsgemäß ist wenigstens ein Schutzelement der Schutzeinrichtung, das insbesondere in der Fokusebene bzw. (Zwischen-) Bildebene angeordnet ist, als nichtlineares optisches Element ausgebildet. Durch das Schutzelement wird letztlich ein Schwellwert definiert, ab dem das Schutzelement (nichtlinear) eine Dämpfung der Strahlung in dem Strahlengang vornimmt. Da das Schutzelement in der Fokusebene angeordnet ist, ist zu erwarten, dass dort der höchste Intensitätswert der Strahlung bzw. die höchste Bestrahlungsstärke in dem Strahlengang auftritt. Bei Erreichen der Schwelle der Intensität bzw. des definierten Schwellwerts, wird die Strahlung nichtlinear gedämpft, beispielweise absorbiert oder gestreut. Dadurch kann die Detektoreinrichtung vor zu starker Bestrahlung geschützt werden.

Wie eingangs beschrieben, kann die Schutzeinrichtung in der Fokusebene angeordnet sein, sodass die Detektoreinrichtung nicht in der Fokusebene bzw. der Bildebene des fokussierenden optischen Elements angeordnet sein kann - wenn es sich dabei nicht um eine Zwischenbildebene handelt. Daher bietet es sich an, die Detektoreinrichtung dennoch so nah wie möglich an der Fokusebene bzw. der Bildebene anzuordnen - auch wenn die Positionierung der Detektoreinrichtung außerhalb der Fokusebene der Vorrichtung in Bezug auf etwaige in die Vorrichtung einfallende Blend- und/oder Störstrahlung aufgrund einer dadurch bedingten Reduktion der auftreffenden Bestrahlungsstärke reduziert ist. Die Schutzeinrichtung kann somit direkt bzw. unmittelbar an der Detektoreinrichtung angeordnet sein bzw. zu der Detektoreinrichtung benachbart im Strahlengang der Vorrichtung angeordnet sein. Eine Möglichkeit besteht darin, die Schutzeinrichtung und die Detektoreinrichtung durch Ankleben oder Ansprengen miteinander zu verbinden, um so eine möglichst nahe Anordnung der beiden Elemente, also Schutzeinrichtung und Detektoreinrichtung, im Strahlengang der Vorrichtung zu erreichen.

Wie ebenfalls bereits beschrieben, führt die Steuerungseinrichtung eine Dekodierung der durch das Phasenelement kodierten Wellenfront der Strahlung aus. Hierbei basiert die Korrektur, welche die Steuerungseinrichtung vornimmt, auf einem bestimmten Algorithmus. Nach einer Ausgestaltung der Vorrichtung kann vorgesehen sein, dass die Steuerungseinrichtung dazu ausgebildet ist, die Dekodierung mittels eines Wiener Filter auszuführen. Grundsätzlich kann der Algorithmus beliebig gewählt werden bzw. auf den konkreten Anwendungsfall, wie die konkrete Ausgestaltung der Vorrichtung, angepasst werden. Hierbei wird in einer beispielhaften Ausgestaltung ein Wiener Filter vorgeschlagen, um die Kompensation der durch das Phasenelement eingeführten Wellenfrontkodierung vorzunehmen. Ferner ist es möglich den Algorithmus lokal mit unterschiedlichen Parametern auszuführen und/oder lokal verschiedene Algorithmen zu verwenden. Hierdurch ist es möglich, bspw. Zeiteinflüsse, sich ändernde, auf die Vorrichtung einwirkenden Temperatur- und/oder Druckänderungen -wie sie bspw. bei Aufheizung eines Suchkopfes eines Flugkörpers während seines Flugs auftreten können - zu berücksichtigen. Zweckmäßigerweise sind hierzu in der Steuerungseinrichtung entsprechende Informationen hinterlegt. Es kann jedoch auch vorgesehen sein, dass die Steuerungseinrichtung dazu eingerichtet ist, aus einem aktuellen Bildinhalt und dessen Historie entsprechende Parameter für den Algorithmus auszuwählen und/oder einen bestimmten Typ von Algorithmus zu verwenden.

Die Vorrichtung kann ferner dahingehend weitergebildet werden, dass wenigstens ein Parameter, beispielsweise ein Phasenhub, und/oder eine Eigenschaft des Phasenelements, beispielsweise eine Phasenplatte, basierend auf einem Symmetrie-Kriterium der Vorrichtung und/oder basierend auf der optischen Übertragungsfunktion der Vorrichtung festgelegt ist. Wie eingangs beschrieben, soll das Phasenelement die Nullstellen in der Kontrastübertragungsfunktion bzw. der Modulationstransferfunktion reduzieren. Insbesondere können durch die Wellenfrontkodierung die Nullstellen eliminiert werden. Grundsätzlich sind verschiedene Formen von Phasenelementen bzw. Phasenplatten bekannt, beispielsweise kubische Phasenplatten, wobei in Abhängigkeit der konkreten Anwendung eine geeignete Phasenplatte ausgewählt sein kann. Mit anderen Worten kann wenigstens ein Phasenelementparameter des Phasenelements basierend auf wenigstens einem Parameter der Vorrichtung, zum Beispiel einem optischen Parameter, insbesondere einem Symmetriekriterium, und/oder basierend auf der optischen Übertragungsfunktion der Vorrichtung festgelegt sein.

Das Phasenelement kann insbesondere dazu ausgebildet sein, in der Fokusebene eine Punktbildfunktion mit definierter Bildqualität zu erzeugen und in der Detektorebene der Detektoreinrichtung ein Signal zu erzeugen, das mittels der Steuerungseinrichtung dekodierbar ist. Aus anderen Bereichen der Technik bekannte Anwendungsgebiete von Wellenfrontkodierungen, beispielsweise das Erhöhen einer Fokustiefe, ist für den vorliegenden Anwendungsfall nicht erforderlich. Das Phasenelement der Vorrichtung soll in der Fokusebene eine Punktbildfunktion erzeugen, die die Funktion der Limitierung der Bestrahlungsstärke durch den nichtlinearen optischen Effekt bestmöglich realisiert. Dies erlaubt, durch die Schutzeinrichtung eine zuverlässige Dämpfung von für den Detektor bzw. die Detektoreinrichtung potenziell schädlicher Strahlung zu gewährleisten.

Gleichzeitig soll das Phasenelement in der Detektorebene der Detektoreinrichtung ein Signal erzeugen können, das mittels der Steuerungseinrichtung dekodierbar ist. Letztlich wird somit durch die beschriebene optische Anordnung innerhalb der Vorrichtung ein Kompromiss erzeugt, gemäß welchem sowohl ein zuverlässiges Triggern der Schutzeinrichtung als auch eine zuverlässige Dekodierung der Wellenfrontkodierung möglich sein soll. Mit anderen Worten wird das defokussierte Bild, das in der Detektorebene der Detektoreinrichtung erzeugt wird, durch den Algorithmus korrigiert. Hierzu muss die Vorrichtung, insbesondere das Phasenelement, zum einen so festgelegt sein, dass die Bildqualität in der Fokusebene ausreicht, um das Schutzelement zuverlässig zu triggern und andererseits darf die Abweichung des Bilds in der Detektorebene nicht zu stark sein, um eine zuverlässige Dekodierung mittels des Algorithmus seitens der Steuerungseinrichtung nicht zu beeinträchtigen.

Die Steuerungseinrichtung kann nach einer weiteren Ausgestaltung der Vorrichtung dazu ausgebildet sein, wenigstens einen weiteren optischen Fehler, insbesondere einen thermisch-, chromatisch- oder montagebedingten Fehler, und/oder wenigstens einen feldabhängigen Fehler und/oder wenigstens einen auf einem Betriebsparameter basierenden Fehler zu kompensieren. Das Phasenelement bzw. die Phasenplatte kann somit zusätzlich dazu ausgebildet sein, weitere optische Fehler, neben dem Defokus, zu kompensieren. Unter dem Begriff des weiteren Fehlers lässt sich insbesondere eine optische Aberration bzw. ein Farbfehler oder allgemein ein Fehler höherer Ordnung subsumieren.

Im Speziellen können Temperaturfehler, beispielsweise bei sich verändernder Temperatur der Vorrichtung oder einer ihrer Komponenten oder eines Montagefehlers, der die Position wenigstens eines optischen Elements im Strahlengang der Vorrichtung betrifft, korrigiert werden. Dies kann beispielsweise im Wege einer Temperaturmessung realisiert werden. Beispielsweise wird bei einem dem fokussierenden optischen Element vorgeschalteten Domelement im Betrieb der Vorrichtung, zum Beispiel als Bestandteil eines Flugkörpers, insbesondere eines Suchkopfs eines Flugkörpers, eine Aufheizung stattfinden, die die Funktion der Vorrichtung beeinträchtigen kann. Weitere Möglichkeiten bestehen darin Betriebsparameter der Vorrichtung bzw. der übergeordneten Einrichtung zu Grunde zu legen. Beispielsweise kann ein Modell der Trajektorie bzw. Flugbahn oder weitere Bewegungsparameter sowie physikalische Größen wie Temperatur- und Druckverläufe einbezogen werden.

Im Zuge der zuvor beschriebenen algorithmischen Defokus-Kompensation können somit auch andere Fehler, beispielsweise Defokus-Fehler (thermisch-, chromatisch- oder montagebedingt) kompensiert werden. Zusätzlich können auch andere Aberrationen oder Montagefehler höherer Ordnung korrigiert werden. Eine weitere Möglichkeit besteht darin feldabhängige optische Fehler durch Wellenfrontkodierung algorithmisch zu kompensieren, wie sie zum Beispiel durch ein strukturangepasstes Fenster oder durch asymmetrische Aufheizung von Fenstern auftreten, welche beispielsweise bei Flugkörpern bzw. Suchköpfen und Aufklärungseinrichtungen zum Einsatz kommen. Hierzu kann es erforderlich sein, dass der Algorithmus lokal unterschiedlich parametrisiert ist oder, dass lokal unterschiedliche Algorithmen verwendet werden.

Wie beschrieben, kann dem Algorithmus bzw. der Steuerungseinrichtung wenigstes eine externe Information zugeführt werden, wie Messwerte von Sensoren, beispielsweise Temperatur, Druck oder Bewegungszustandsinformationen. Die entsprechenden Informationen können auch modellbasiert, zum Beispiel in Abhängigkeit der vorausberechneten Trajektorie, bereitgestellt werden bzw. in der Steuerungseinrichtung hinterlegt sein. Eine weitere Möglichkeit besteht darin, Informationen aus dem aktuellen Bildinhalt und dessen Historie bzw. Prädiktion zuzuführen.

Eine weitere Ausgestaltung der Vorrichtung kann vorsehen, dass die Detektoreinrichtung als Matrixdetektor ausgebildet ist oder einen solchen Matrixdetektor umfasst. Durch die beschriebene Schutzeinrichtung ist es insbesondere möglich, vergleichsweise anfällige Matrixdetektoren zu verwenden, die üblicherweise für ein "Blenden" besonders anfällig sind.

Daneben betrifft die Erfindung ein Verfahren zum Betreiben durch ein Fluggerät, Flugkörper oder Wirkmittel umfassend einen Suchkopf oder eine Aufklärungseinrichtung mit einer Vorrichtung zur optischen Erfassung eines Zielobjekts gemäß Patentanspruch 8, , umfassend ein fokussierendes optisches Element, das dazu ausgebildet ist, durch das optische Element fallende Strahlung in einer Fokusebene zu fokussieren, eine in der Fokusebene angeordnete Schutzeinrichtung, die dazu ausgebildet ist, Strahlung in Abhängigkeit eines Strahlungsparameters zu limitieren, beispielsweise absorbieren, und eine Detektoreinrichtung, die in einer in dem Strahlengang der Vorrichtung nach der Schutzeinrichtung angeordneten Detektorebene angeordnet ist, wobei zwischen dem optischen Element und der Fokusebene, insbesondere an dem optischen Element, im Speziellen als Teil des optischen Elements, zur Wellenfrontkodierung der Strahlung ein Phasenelement vorgesehen ist, welche Wellenfrontkodierung mittels einer Steuerungseinrichtung der Vorrichtung dekodiert wird.

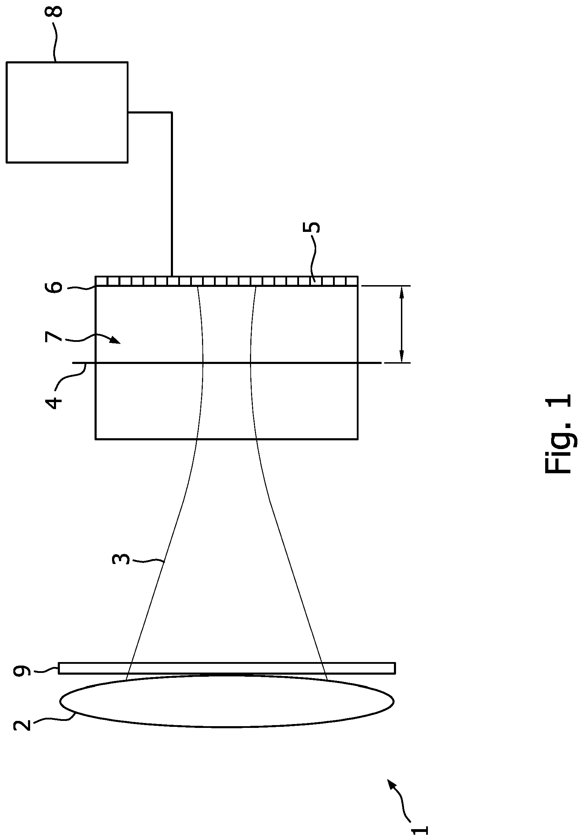

Sämtliche Vorteile, Einzelheiten und Merkmale die in Bezug auf die Vorrichtung beschrieben wurden, sind vollständig auf das Verfahren übertragbar. Die Erfindung wird nachfolgend anhand eines Ausführungsbeispiels unter Bezugnahme auf die Fig. 1 erläutert. Die Fig. 1 ist eine schematische Darstellung einer Vorrichtung zur optischen Erfassung eines Zielobjekts.

Fig. 1 zeigt einen Ausschnitt einer Vorrichtung 1 zur Erfassung eines nicht näher dargestellten Zielobjekts, wie sie beispielsweise in einem Suchkopf bzw. einem Aufklärungssystem, mobil oder stationär verwendet werden kann. Beispielsweise kann die Vorrichtung 1 Bestandteil eines Flugkörpers oder eines Wirkmittels sein.

Die Vorrichtung 1 ist lediglich schematisch dargestellt, sodass die Vorrichtung 1 zusätzlich zu den gezeigten Komponenten weitere Komponenten aufweisen kann. Die Vorrichtung 1 ist somit schematisch auf die für die hierin beschriebene Funktion wichtigen Komponenten reduziert.

Die Vorrichtung 1 weist ein fokussierendes optisches Element 2, beispielsweise eine Linse oder ein Linsensystem auf, das dazu ausgebildet ist, Strahlung 3 auf eine Fokusebene 4, die auch als Bildebene bezeichnet bzw. erachtet werden kann, zu fokussieren. Die Vorrichtung 1 weist ferner eine Detektoreinrichtung 5 auf, die in einer Detektorebene 6 angeordnet ist. Ziel ist es ein Ziel zu erfassen, indem die Vorrichtung 1 das Zielobjekt auf die Detektoreinrichtung 5 in der Detektorebene 6 abbildet und mittels geeigneter Algorithmen erfasst bzw. identifiziert.

Zum Schutz der Detektoreinrichtung 5 weist die Vorrichtung 1 eine Schutzeinrichtung 7 auf, die in der Fokusebene 4 angeordnet ist. Die Schutzeinrichtung 7 weist wenigstens ein Schutzelement auf, das als nichtlineares optisches Element ausgebildet ist. Die Schutzeinrichtung 7 ist somit in der Fokusebene 4 angeordnet, um sicherzustellen, dass die höchste Intensität bzw. Bestrahlungsstärke der Strahlung 3 in der Fokusebene 4 erreicht wird und somit bei Überschreiten eines definierten Schwellwerts die Schutzeinrichtung 7 zuverlässig getriggert wird, sodass diese die Strahlung 3 dämpfen und die Detektoreinrichtung 5 schützen kann. Die Schutzeinrichtung 7 kann die Detektoreinrichtung 5 somit vor zerstörender Strahlung, beispielsweise Laserstrahlung, schützen. Hierbei kann sich der Transmissionsgrad der Schutzeinrichtung 7 in Abhängigkeit der Bestrahlungsstärke ändern, sodass bei einer Bestrahlungsstärke ab einem gewissen Schwellwert nichtlinear eine Dämpfung, beispielsweise eine Absorption der Strahlung 3 durch die Schutzeinrichtung 7 auftritt.

In dem gezeigten Ausführungsbeispiel ist die Schutzeinrichtung 7 benachbart zu der Detektoreinrichtung 5 angeordnet. Hierbei kann die Schutzeinrichtung 7 unmittelbar an der Detektoreinrichtung 5 angeordnet sein, beispielsweise durch Ankleben oder Ansprengen. Dies führt dazu, dass zwar die Schutzeinrichtung 7 in der Fokusebene 4 angeordnet werden kann, die Detektoreinrichtung 5 jedoch so nah wie möglich an der Fokusebene 4 angeordnet werden kann, um den eingebrachten Defokus so gering wie möglich zu halten.

Die Detektoreinrichtung 5 kann grundsätzlich beliebig ausgestaltet werden und ist in diesem Ausführungsbeispiel als Matrixdetektor ausgeführt und mit einer Steuerungseinrichtung 8 gekoppelt bzw. wirkverbunden. Ersichtlich ist die Detektoreinrichtung 5 nicht in der Fokusebene 4 angeordnet, sodass das Bild einer Objektszene, das auf die Detektoreinrichtung 5 trifft, notwendigerweise defokussiert ist. Um den Defokus zu korrigieren, weist die Vorrichtung 1 ein Phasenelement 9 auf, das im Strahlengang der Vorrichtung 1 angeordnet oder ausgebildet ist. Obwohl das Phasenelement 9, beispielsweise als Phasenplatte ausgeführtes Einzelelement dargestellt ist, kann das Phasenelement 9 auch als integraler Bestandteil einer Komponente des optischen Systems, zum Beispiel einer Oberfläche einer Linse oder eines Spiegels realisiert werden.

Das Phasenelement 9 führt eine Wellenfrontkodierung der Wellenfront der Strahlung 3 aus, sodass die Steuerungseinrichtung 8 eine Dekodierung vornehmen kann und den Defokus-Fehler des Bilds auf der Detektoreinrichtung 5 korrigieren kann. Mit anderen Worten wird durch das Phasenelement 9 eine Veränderung der Wellenfront der Strahlung 3 eingeführt, die anschließend algorithmisch durch die Steuerungseinrichtung 8 wieder kompensiert werden kann. Das Phasenelement 9 führt dabei eine Wellenfrontkodierung derart ein, dass Nullstellen in der optischen Transferfunktion verringert bzw. eliminiert werden können. Dadurch ist die Steuerungseinrichtung 8 in der Lage, die Korrektur des Bilds auf der Detektoreinrichtung 5 vorzunehmen. Hierzu verwendet die Steuerungseinrichtung 8 einen geeigneten Algorithmus, beispielsweise ein Wiener Filter. Das Phasenelement 9 kann grundsätzlich beliebig ausgestaltet sein. Hierin kann insbesondere vorgesehen sein, dass wenigstens ein Parameter des Phasenelements 9 bezogen auf den Strahlengang der Vorrichtung 1 bzw. der optischen Transferfunktion der Vorrichtung 1 festgelegt ist.

Im Zuge der beschriebenen algorithmischen Defokus-Kompensation können auch weitere Fehler, beispielsweise Defokus-Fehler, die thermisch, chromatisch oder Montage bedingt induziert sind, kompensiert werden. Weiterhin können auch Aberrationen und Montagefehler höherer Ordnung korrigiert werden. Hierzu kann die Strahlungseinrichtung 8 auch auf Betriebsparameter der Vorrichtung 1 bzw. einer übergeordneten Einrichtung zugreifen. Zum Beispiel können eine Trajektorie oder ein Zeitzähler, eine Sensorik, beispielsweise ein Temperatursensor und/oder ein Drucksensor, oder weitere Bewegungszustandsinformationen herangezogen werden. Ebenso ist es möglich, dass die Steuerungseinrichtung 8 dazu ausgebildet ist, einen Algorithmus in unterschiedlichen Bereichen der Detektoreinrichtung 5 anzuwenden bzw. grundsätzlich andere Algorithmen in verschiedenen Bereichen der Detektoreinrichtung 5 anzuwenden.

### Bezugszeichenliste

- 1: Vorrichtung
- 2: optisches Element
- 3: Strahlung
- 4: Fokusebene
- 5: Detektoreinrichtung
- 6: Detektorebene
- 7: Schutzeinrichtung
- 8: Steuerungseinrichtung
- 9: Phasenelement

## Patentansprüche

1. Fluggerät, Flugkörper oder Wirkmittel umfassend einen Suchkopf oder eine Aufklärungseinrichtung mit einer Vorrichtung (1) zur optischen Erfassung eines Zielobjekts, wobei die Vorrichtung umfasst
a) ein fokussierendes optisches Element (2), das dazu ausgebildet ist, durch das optische Element fallende Strahlung (3) in einer Fokusebene (4) zu fokussieren,
b) eine in der Fokusebene (4) angeordnete Schutzeinrichtung (7), die dazu ausgebildet ist, Strahlung (3) in Abhängigkeit eines Strahlungsparameters, insbesondere einer Bestrahlungsstärke, zu limitieren, insbesondere zu absorbieren, wobei die Schutzeinrichtung (7) wenigstens ein Schutzelement aufweist, das als nichtlineares optisches Element ausgeführt ist,
c) eine Detektoreinrichtung (5), die in einer in dem Strahlengang der Vorrichtung (1) nach der Schutzeinrichtung (7) angeordneten Detektorebene (6) angeordnet ist, welche sich außerhalb der Fokusebene (4) befindet,
d) eine Steuerungseinrichtung (8), die zur Weiterverarbeitung der Detektorsignale der Detektoreinrichtung (5) eingerichtet ist,
wobei
- zwischen dem optischen Element (2) und der Fokusebene (4), insbesondere an dem optischen Element (2) oder als Teil des optischen Elements (2), zur Wellenfrontkodierung der Strahlung (3) ein Phasenelement (9) vorgesehen ist,
- die Wellenfrontkodierung mittels der Steuerungseinrichtung (8) der Vorrichtung (1) dekodierbar ist, so dass die Defokussierung eines Bilds in der außerhalb der Fokusebene (4) befindlichen Detektorebene (6) beseitigt werden kann.

2. Vorrichtung (1) nach Anspruch 1, **dadurch gekennzeichnet, dass** das Phasenelement (9) zur Modifikation der Punktbildfunktion derart ausgebildet ist, dass die optische Transferfunktion keine Nullstellen aufweist.

3. Vorrichtung (1) nach einem der vorangehenden Ansprüche, **dadurch gekennzeichnet, dass** die Schutzeinrichtung (7), insbesondere unmittelbar, an der Detektoreinrichtung (5) angeordnet ist, insbesondere durch Ankleben oder Ansprengen.

4. Vorrichtung (1) nach einem der vorangehenden Ansprüche, **dadurch gekennzeichnet, dass** die Steuerungseinrichtung (8) dazu ausgebildet ist, die Dekodierung mittels eines Wiener Filters auszuführen.

5. Vorrichtung (1) nach einem der vorangehenden Ansprüche, **dadurch gekennzeichnet, dass** wenigstens ein Parameter des Phasenelements (9), insbesondere eine Phasenplatte, basierend auf einem Symmetrie-Kriterium der Vorrichtung (1) und/oder basierend auf der optischen Übertragungsfunktion der Vorrichtung (1) festgelegt ist.

6. Vorrichtung (1) nach einem der vorangehenden Ansprüche, **dadurch gekennzeichnet, dass** das Phasenelement (9) dazu ausgebildet ist, in der Fokusebene (4) eine Punktbildfunktion mit definierter Bildqualität zu erzeugen und in der Detektorebene (6) der Detektoreinrichtung (5) ein Signal zu erzeugen, das mittels der Steuerungseinrichtung (8) dekodierbar ist.

7. Vorrichtung (1) nach einem der vorangehenden Ansprüche, **dadurch gekennzeichnet, dass** die Steuerungseinrichtung (8) dazu ausgebildet ist, wenigstens einen weiteren optischen Fehler, insbesondere einen thermisch-, chromatisch- oder montage- bedingten Fehler, und/oder wenigstens einen feldabhängigen Fehler und/oder wenigstens einen auf einem Betriebsparameter basierenden Fehler zu kompensieren.

8. Vorrichtung (1) nach einem der vorangehenden Ansprüche, **dadurch gekennzeichnet, dass** die Detektoreinrichtung (5) als Matrixdetektor ausgebildet ist oder einen solchen umfasst.

9. Verfahren zum Betreiben eines Fluggeräts, Flugkörpers oder Wirkmittels eines Suchkopfs oder einer Aufklärungseinrichtung mit einer Vorrichtung (1) zur optischen Erfassung eines Zielobjekts, wobei die Vorrichtung umfasst
a) ein fokussierendes optisches Element (2), das dazu ausgebildet ist, durch das optische Element (2) fallende Strahlung (3) in einer Fokusebene (4) zu fokussieren,
b) eine in der Fokusebene (4) angeordnete Schutzeinrichtung (7), die dazu ausgebildet ist, Strahlung (3) in Abhängigkeit eines Strahlungsparameters zu limitieren, wobei die Schutzeinrichtung (7) wenigstens ein Schutzelement aufweist, das als nichtlineares optisches Element ausgeführt ist,
c) eine Detektoreinrichtung (5), die in einer in dem Strahlengang der Vorrichtung (1) nach der Schutzeinrichtung (7) angeordneten Detektorebene (6) angeordnet ist, welche sich außerhalb der Fokusebene (4) befindet,
d) eine Steuerungseinrichtung (8), die zur Weiterverarbeitung der Detektorsignale der Detektoreinrichtung (5) eingerichtet ist,
wobei
- zwischen dem optischen Element (2) und der Fokusebene (4), insbesondere an dem optischen Element (2) oder als Teil des optischen Elements (2), zur Wellenfrontkodierung der Strahlung ein Phasenelement (9) vorgesehen ist,
- die Wellenfrontkodierung mittels der Steuerungseinrichtung (8) der Vorrichtung (1) dekodiert wird, so dass die Defokussierung eines Bilds in der außerhalb der Fokusebene(4) befindlichen Detektorebene (6) beseitigt werden kann.

## Claims

1. Aircraft, missile or effector comprising a homing head or a reconnaissance device with an apparatus (1) for optically capturing a target object, wherein the apparatus comprises
a) a focusing optical element (2) designed to focus radiation (3) incident through the optical element in a focal plane (4),
b) a protective device (7) arranged in the focal plane (4) and designed to limit, in particular to absorb, radiation (3) depending on a radiation parameter, in particular an irradiance, wherein the protective device (7) has at least one protective element embodied as a non-linear optical element,
c) a detector device (5) which is arranged in a detector plane (6) which is arranged in the beam path of the apparatus (1) downstream of the protective device (7), and which is situated outside the focal plane (4),
d) a control device (8) configured for further processing of the detector signals of the detector device (5),
wherein
- between the optical element (2) and the focal plane (4), in particular on the optical element (2) or as part of the optical element (2), a phase element (9) is provided for wavefront encoding of the radiation (3),
- the wavefront encoding is decodable by means of the control device (8) of the apparatus (1) so that the defocusing of an image in the detector plane (6) situated outside the focal plane (4) can be eliminated.

2. Apparatus (1) according to Claim 1, **characterized in that** the phase element (9) is designed for modifying the point spread function in such a way that the optical transfer function has no zeros.

3. Apparatus (1) according to either of the preceding claims, **characterized in that** the protective device (7) is arranged, in particular directly, on the detector device (5), in particular by adhesive bonding or wringing.

4. Apparatus (1) according to any of the preceding claims, **characterized in that** the control device (8) is designed to carry out the decoding by means of a Wiener filter.

5. Apparatus (1) according to any of the preceding claims, **characterized in that** at least one parameter of the phase element (9), in particular a phase plate, is defined on the basis of a symmetry criterion of the apparatus (1) and/or on the basis of the optical transfer function of the apparatus (1).

6. Apparatus (1) according to any of the preceding claims, **characterized in that** the phase element (9) is designed to generate a point spread function with defined image quality in the focal plane (4) and to generate a signal in the detector plane (6) of the detector device (5), which signal is decodable by means of the control device (8).

7. Apparatus (1) according to any of the preceding claims, **characterized in that** the control device (8) is designed to compensate for at least one further optical aberration, in particular a thermally dictated, chromatically dictated or mounting-dictated aberration, and/or at least one field-dependent aberration and/or at least one aberration based on an operating parameter.

8. Apparatus (1) according to any of the preceding claims, **characterized in that** the detector device (5) is designed as or comprises a matrix detector.

9. Method for operating an aircraft, a missile or an effector of a homing head or a reconnaissance device with an apparatus (1) for optically capturing a target object, wherein the apparatus comprises
a) a focusing optical element (2) designed to focus radiation (3) incident through the optical element (2) in a focal plane (4),
b) a protective device (7) arranged in the focal plane (4) and designed to limit radiation (3) depending on a radiation parameter, wherein the protective device (7) has at least one protective element embodied as a non-linear optical element,
c) a detector device (5) which is arranged in a detector plane (6) which is arranged in the beam path of the apparatus (1) downstream of the protective device (7), and which is situated outside the focal plane (4),
d) a control device (8) configured for further processing of the detector signals of the detector device (5),
wherein
- between the optical element (2) and the focal plane (4), in particular on the optical element (2) or as part of the optical element (2), a phase element (9) is provided for wavefront encoding of the radiation,
- the wavefront encoding is decoded by means of the control device (8) of the apparatus (1) so that the defocusing of an image in the detector plane (6) situated outside the focal plane (4) can be eliminated.

## Revendications

1. Aéronef, missile ou moyen d'action comprenant un autodirecteur ou un dispositif de reconnaissance doté d'un dispositif (1) pour la détection optique d'une cible, le dispositif comprenant
a) un élément optique de focalisation (2) qui est conçu pour focaliser un rayonnement (3) incident à travers l'élément optique dans un plan focal (4),
b) un dispositif de protection (7) disposé dans le plan focal (4), qui est conçu pour limiter, en particulier absorber, le rayonnement (3) en fonction d'un paramètre de rayonnement, notamment une irradiance, le dispositif de protection (7) comportant au moins un élément de protection qui est réalisé sous forme d'élément optique non linéaire,
c) un dispositif détecteur (5) qui est disposé dans un plan de détection (6) agencé sur le trajet de faisceau du dispositif (1) après le dispositif de protection (7), lequel se trouve en dehors du plan focal (4),
d) un dispositif de commande (8) qui est conçu pour le traitement ultérieur des signaux de détecteur provenant du dispositif détecteur (5),
dans lequel
- un élément de phase (9) pour le codage de front d'onde du rayonnement (3) est prévu entre l'élément optique (2) et le plan focal (4), en particulier sur l'élément optique (2) ou comme partie de l'élément optique (2),
- le codage de front d'onde peut être décodé au moyen du dispositif de commande (8) du dispositif (1), de sorte que la défocalisation d'une image dans le plan de détection (6) situé en dehors du plan focal (4) peut être éliminée.

2. Dispositif (1) selon la revendication 1, **caractérisé en ce que** l'élément de phase (9) est conçu pour modifier la fonction d'étalement du point de telle sorte que la fonction de transfert optique ne présente pas de zéros.

3. Dispositif (1) selon l'une quelconque des revendications précédentes, **caractérisé en ce que** le dispositif de protection (7) est disposé, en particulier directement, sur le dispositif détecteur (5), notamment par collage ou jonction directe.

4. Dispositif (1) selon l'une quelconque des revendications précédentes, **caractérisé en ce que** le dispositif de commande (8) est conçu pour effectuer le décodage au moyen d'un filtre de Wiener.

5. Dispositif (1) selon l'une quelconque des revendications précédentes, **caractérisé en ce qu'**au moins un paramètre de l'élément de phase (9), en particulier une lame de phase, est défini sur la base d'un critère de symétrie du dispositif (1) et/ou sur la base de la fonction de transfert optique du dispositif (1).

6. Dispositif (1) selon l'une quelconque des revendications précédentes, **caractérisé en ce que** l'élément de phase (9) est conçu pour générer dans le plan focal (4) une fonction d'étalement du point avec une qualité d'image définie et pour générer dans le plan de détection (6) du dispositif détecteur (5) un signal qui peut être décodé au moyen du dispositif de commande (8).

7. Dispositif (1) selon l'une quelconque des revendications précédentes, **caractérisé en ce que** le dispositif de commande (8) est conçu pour compenser au moins une autre erreur optique, en particulier une erreur d'origine thermique, chromatique ou de montage, et/ou au moins une erreur dépendant de la zone et/ou au moins une erreur basée sur un paramètre de fonctionnement.

8. Dispositif (1) selon l'une quelconque des revendications précédentes, **caractérisé en ce que** le dispositif détecteur (5) est conçu sous forme de détecteur matriciel ou comprend un tel détecteur matriciel.

9. Procédé de fonctionnement d'un aéronef, d'un missile ou d'un moyen d'action d'un autodirecteur ou d'un dispositif de reconnaissance doté d'un dispositif (1) pour la détection optique d'une cible, le dispositif comprenant
a) un élément optique de focalisation (2) qui est conçu pour focaliser un rayonnement (3) incident à travers l'élément optique (2) dans un plan focal (4),
b) un dispositif de protection (7) disposé dans le plan focal (4), qui est conçu pour limiter le rayonnement (3) en fonction d'un paramètre de rayonnement, le dispositif de protection (7) comportant au moins un élément de protection qui est réalisé sous forme d'élément optique non linéaire,
c) un dispositif détecteur (5) qui est disposé dans un plan de détection (6) agencé sur le trajet de faisceau du dispositif (1) après le dispositif de protection (7), lequel se trouve en dehors du plan focal (4),
d) un dispositif de commande (8) qui est conçu pour le traitement ultérieur des signaux de détecteur provenant du dispositif détecteur (5),
dans lequel
- un élément de phase (9) pour le codage de front d'onde du rayonnement est prévu entre l'élément optique (2) et le plan focal (4), en particulier sur l'élément optique (2) ou comme partie de l'élément optique (2),
- le codage de front d'onde peut être décodé au moyen du dispositif de commande (8) du dispositif (1), de sorte que la défocalisation d'une image dans le plan de détection (6) situé en dehors du plan focal (4) peut être éliminée.
